# EUROPÄISCHE PATENTSCHRIFT

(11) **EP 4 671 723 B1**
(45) Veröffentlichungstag und Bekanntmachung des Hinweises auf die Patenterteilung: **25.11.2026**
(21) Anmeldenummer: 25183541.9
(22) Anmeldetag: 18.06.2025
(51) Int. Cl.: G01M 9/06, B64C 21/06

(54) **VORRICHTUNG ZUR SICHTBARMACHUNG VON GASSTRÖMUNGEN IN EINEM RAUM, INSBESONDERE IN EINEM REINRAUM**
DEVICE FOR THE VISUALISATION OF GAS FLOWS IN A ROOM, ESPECIALLY IN A CLEAN ROOM
DISPOSITIF POUR RENDRE VISIBLE LES ÉCOULEMENTS DE GAZ DANS UNE PIÈCE, EN PARTICULIER DANS UNE SALLE BLANCHE

(30) Priorität: 24.06.2024 DE 102024117674
(43) Veröffentlichungstag der Anmeldung: 31.12.2025
(73) Patentinhaber: Syntegon Technology GmbH, 70372 Stuttgart (DE)
(72) Erfinder: Eisenschmid, Ralph, 71672 Marbach (DE)
(74) Vertreter: Novagraaf Group

(56) Entgegenhaltungen:
- EP-A1- 2 886 452
- CN-B- 113 188 749
- DE-C1- 19 641 351
- GB-A- 470 211
- GB-A- 610 620
- GB-A- 792 243
- JP-A- H11 101 709
- FRANSSON J H M ET AL: "Flow around a porous cylinder subject to continuous suction or blowing", JOURNAL OF FLUIDS AND STRUCTURES, ACADEMIC PRESS, AMSTERDAM, NL, vol. 19, no. 8, 1 November 2004 (2004-11-01), pages 1031 - 1048, XP004647434, ISSN: 0889-9746, DOI: 10.1016/J.JFLUIDSTRUCTS.2004.06.005

## Beschreibung

Die Erfindung betrifft ein Verfahren zur Sichtbarmachung von Gasströmungen in einem Raum, insbesondere in Reinräumen. Die Verwendung von Rauch bzw. Nebel zur Sichtbarmachung von Gasströmung ist eine gängige Methode, die insbesondere verwendet wird, um laminare Strömungen in Reinräumen zu identifizieren
Rauch oder Nebel werden zu diesem Zweck üblicherweise durch die Verbrennung von speziellen Rauchpatronen oder ggf. auch durch das Verdampfen von speziellen Flüssigkeiten oder Verwendung von Trockeneis erzeugt.

Rauch oder Nebel werden dann üblicherweise mit einer speziellen Vorrichtung umfassend ein Sondenrohr in den Bereich eingebracht, in welchem die Gasströmungen sichtbar gemacht werden sollen. Ein solches Sondenrohr hat üblicherweise Austrittsöffnungen, aus denen der Rauch bzw. der Nebel austreten kann. Der Rauch bzw. der Nebel bildet dann Fäden aus, die für einen Betrachter sichtbar sind. Anhand dieser Fäden kann der Verlauf von Gasströmungen in dem Raum nachvollzogen werden.

Häufig ist es erforderlich Gasströmungen durch einen Reinraum zu erkennen, um Prozesse, die in dem Reinraum durchgeführt werden zu optimieren. Verunreinigungen werden in Reinräumen häufig durch Gasströmungen verteilt. Die Kenntnis über in einem Reinraum auftretende Gasströmungen ist äußerst hilfreich, um den Betrieb des Reinraumes zu optimieren. Vorrichtungen zur Sichtbarmachung von Gasströmungen in Reinräumen oder Strömungskanälen sind beispielsweise aus den Schriften JP H11 101709 A und CN 113 188 749 B bekannt.

Es betrifft ein grundsätzliches Bedürfnis nach verbesserten Vorrichtungen und Verfahren zur Sichtbarmachung von Gasströmungen und insbesondere zur Sichtbarmachung von laminaren Gasströmungen in Reinräumen. Je besser es gelingt solche Gasströmungen sichtbar zu machen, umso besser können solche Gasströmungen verstanden werden und umso mehr können in Reinräumen durchgeführte Prozesse optimiert werden.

Hiervon ausgehend ist es Aufgabe der vorliegenden Erfindung, die mit Bezug auf den Stand der Technik geschilderten Probleme wenigstens teilweise zu lösen und insbesondere eine Vorrichtung anzugeben, mit der eine besonders präzise Sichtbarmachung von Gasströmungen in Reinräumen möglich ist.

Diese Aufgaben werden gelöst mit einer Vorrichtung und einem Verfahren gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann einzelne Merkmale in technologisch sinnvoller Weise miteinander kombinieren kann und damit zu weiteren Ausgestaltungen der Erfindung gelangt.

Hier beschrieben werden soll eine Vorrichtung zur Sichtbarmachung von Gasströmungen in einem Raum aufweisend ein Sondenrohr, welches dazu eingerichtet ist, sich in den Raum hinein zu erstrecken, wobei das Sondenrohr mindestens eine Austrittsöffnung aufweist, über welche eine dosierte Zugabe eines Fluids zur Sichtbarmachung der Gasströmungen in den Raum möglich ist, wobei in dem Sondenrohr ein Versorgungskanal zum Versorgen der mindestens einen Austrittsöffnung mit Fluid angeordnet ist, wobei das Sondenrohr eine abgeflachtes Querschnittsprofil mit einer Anströmkante und einer Abströmkante aufweist und wobei die Austrittsöffnung im Bereich der Abströmkante an dem Sondenrohr angeordnet ist, wobei das Sondenrohr weiter mindestens eine Absaugöffnung aufweist, durch welche eine Grenzschicht einer Gasströmung um das Sondenrohr herum absaugbar ist, um Turbulenzen das Gasströmung zu reduzieren.

Eine solche Vorrichtung kann insbesondere von einem Bediener per Hand bedient und in einen Raum eingebracht werden, in dem Gasströmungen untersucht werden sollen. Eine Solche Vorrichtung kann insbesondere dazu verwendet werden, um in Reinräumen und/oder in Testräumen, in welchen Reinraumbedingungen in Reinräumen simuliert werden sollen, Gasströmungen sichtbar zu machen. In Reinräumen auftretende Gasströmungen sind häufig nicht zu vermeiden. Sie haben jedoch regelmäßig erhebliche Auswirkungen auf die Verteilung von Partikeln innerhalb des Reinraumes. Durch eine geeignete Auslegung von Anlagen in einem Reinraum ist es möglich die Auswirkung von Gasströmungen auf in einem Reinraum mit derartigen Anlagen betriebene Prozesse zu reduzieren. Solch ein Prozess kann beispielsweise das Abfüllen von pharmazeutischen Produkten mit einer Abfüllanlage sein. Unter Berücksichtigung von Erkenntnissen über in dem Reinraum auftretende Gasströmungen werden Stationen, an denen zu befüllende Behältnisse geöffnet sind, bspw. so angeordnet, dass Gasströmungen und insbesondere Gasströmungen mit einem turbulenten Strömungsverhalten nicht oberhalb dieser Stationen auftreten oder zumindest reduziert sind. Die hier behandelte Vorrichtung kann also dazu verwendet werden Gasströmungen zu untersuchen, um dann anhand der dadurch gewonnen Erkenntnisse Anlagen in einem Reinraum zu designen.

Typische Geschwindigkeiten von Gasströmungen, mit der hier beschriebenen Vorrichtung bzw. dem hier beschriebenen Sondenrohr untersucht werden können liegen im Bereich zwischen 0.4 m/s [Meter pro Sekunde] und 2 m/s.

Als Fluid zur Sichtbarmachung wird bevorzugt ein gasförmiges Fluid verwendet, welches Bestandteile enthält, die auskondensieren können und so einen sichtbaren Nebel bilden. Auskondensierte Tröpfchen sind das, was an dem Fluid sichtbar ist. Das Fluid kann beispielsweise ein (gasförmiges) Glycerin-Wasser-Gemisch und oder (gasförmiges) reines Wasser oder (gasförmiges) Glykol sein. Das Fluid kann insbesondere auch ein Gemisch von Luft (und/oder reinem Stickstoff) und darin gelösten Flüssigkeiten wie Wasser oder Glykol sein. Bevorzugt kondensiert das Wasser und/oder das Glykol, wenn das Fluid aus den Austrittsöffnungen austritt. Dadurch bildet sich sichtbare Tröpfchen, mit denen die Gasströmung dann sichtbar gemacht wird. Zur Erzeugung von Fluid zur Sichtbarmachung können beispielsweise auch spezielle Rauchpatronen verbrannt werden. Es können auch Flüssigkeiten verdampft werden, die dann das Fluid zur Sichtbarmachung bilden. Auch die Verwendung von Trockeneis zur Bildung des Fluids zur Sichtbarmachung ist möglich.

Der Versorgungskanal ist insbesondere ein sich in dem Sondenrohr befindlicher Hohlraum, der mit der mindestens einen Austrittsöffnung verbunden ist und über den die mindestens eine Austrittsöffnung mit dem Fluid zur Sichtbarmachung versorgt wird. Ein Strömungswiederstand für das Fluid zur Sichtbarmachung in dem Versorgungskanal sowie eine Strömungsgeschwindigkeit des Fluids zur Sichtbarmachung in dem Versorgungskanal sind bevorzugt gering im Verhältnis zu einem Strömungswiderstand und einer Strömungsgeschwindigkeit des Fluids zur Sichtbarmachung im Bereich der mindestens einen Austrittsöffnung. So kann eine gleichmäßige Versorgung der mindestens einen Austrittsöffnung mit Fluid erreicht werden.

Eine abgeflachte Form des Querschnittsprofils verbessert die Umströmung des Querschnittsprofils durch die Gasströmung. Besonders bevorzugt hat das Sondenrohr eine stromlinienförmiges Querschnittsprofil mit einer abgerundeten Anströmkante und einer spitz zulaufenden Abströmkante. Bevorzugt liegt das Verhältnis der Länge zur Dicke des Querschnittsprofils im Bereich 4:1 bis 8:1. Die Länge des Querschnittprofils von der Anströmkante bis zur Abströmkante beträgt typischerweise zwischen 70 mm [Millimeter] und 130 mm, beispielsweise 100 mm. Die Dicke des Querschnittprofils beträgt beispielsweise zwischen 15 mm und 30 mm, beispielsweise ca. 22 mm. Die Form des Querschnittsprofils begünstigt bevorzugt, dass eine laminare Gasströmung, die das Sondenrohr umströmt und die mit dem Fluid sichtbar gemacht werden soll, erhalten bleibt bzw. durch das Sondenrohr möglichst wenig beeinflusst wird. Ein derartiges geformtes Sondenrohr ermöglicht die besonders gleichmäßige Einbringung von Strömungsfäden des Fluid zur Sichtbarmachung in die Gasströmung (bspw. die Einbringung von Rauchfäden oder Nebelfäden).

Die Anordnung der Austrittsöffnungen für das Fluid zur Sichtbarmachung an der Abströmkante unterstützt die besonders gleichmäßige Einbringung von Strömungsfäden des Fluids zur Sichtbarmachung in die Gasströmung weiter.

Um den Einfluss des Rauchrohrprofils auf die zu messende Strömung zu minimieren, ist eine Grenzschichtabsaugung am Sondenrohr angebracht. Die Grenzschichtabsaugung umfasst Absaugöffnungen an den sich zwischen der Anströmkante und der Abströmkante erstreckenden Seitenoberflächen des Sondenrohrs. Die zu untersuchende Gasströmung umströmt das Sondenrohr, wenn die Vorrichtung zur Untersuchung einer Gasströmung eingesetzt wird. Durch Reibung der Gasströmung an der Oberfläche (den Seitenoberflächen) des Sondenrohrs entsteht eine Grenzschicht. Diese Grenzschicht kann insbesondere im hinteren Bereich des Sondenrohrs (nahe an der Abströmkante) immer dicker werden und sich gegebenenfalls auch ablösen, wobei Wirbel entstehen können. Hierdurch wird die Gasströmung beeinflusst und ggf. auch gestört. Durch eine Absaugung der Grenzschicht durch die Absaugöffnungen kann die Dicke der Grenzschicht reduziert werden. Die Ablösung der Grenzschicht und die Ausbildung von Wirbeln kann verhindert werden. Die Absaugöffnungen können als (rundliche) Löcher in den Seitenoberflächen ausgeführt sein. In Ausführungsvarianten können die Absaugöffnungen auch als längliche Schlitze, die sich entlang des Saugrohres erstrecken und/oder mit einem porösen Bereich in der Seitenoberfläche (einem Bereich mit sehr vielen kleinen Löchern) ausgeführt sein. Besonders bevorzugt sind die Seitenoberflächen zwischen der Anströmkante und der Abströmkante gewölbt und es gibt zwischen der Anströmkante und der Abströmkante einen dicksten Bereich (Bereich maximaler Wölbung). Hinter diesem Bereich werden gewöhnlich die Turbulenzen induziert. Die Strömung ist am dicksten Bereich am schnellsten, und wird dahinter wieder langsamer, also verzögert. Hinter dem dicksten Bereich entstehen Strömungsablösungen. Bevorzugt sind die Absaugöffnungen hinter diesem dicksten Bereich und besonders bevorzugt ungefähr nach 2/3 der Länge des Querschnittsprofils von der Anströmkante zur Abströmkante angeordnet.

Die Wirkungsweise einer Grenzschichtabsaugung kann beispielsweise wie folgt beschrieben werden: Die auf der Oberseite der Tragfläche durch die Wölbung beschleunigte Gasströmung läuft nach dem Passieren der maximalen Wölbung gegen den Druckgradienten am Flächenende an und wird dabei wieder verlangsamt. Die Grenzschicht verliert dabei kinetische Energie, wird dicker und beginnt sich von der Fläche zu lösen. Am Umschlagpunkt wird aus der laminaren Grenzschicht eine turbulente Strömung. Die Folge ist, dass der von der Fläche produzierte Auftrieb sinkt, während gleichzeitig der Widerstand zunimmt. Um in einem weiten Flugbereich über einem möglichst großen Teil der Tragfläche eine laminare Strömung zu gewährleisten, muss das Umschlagen der Grenzschicht von laminar zu turbulent verhindert werden. Dies erfolgt durch die Absaugung der Grenzschicht durch die Absaugöffnungen.

Bisher gebräuchliche Sondenrohre (häufig auch Rauchrohre genannt) geben das Fluid zur Sichtbarmachung (üblicherweise Rauch) regelmäßig durch eine einzige kreisförmige Öffnung ab, die bspw. am Rohrende angeordnet ist. Der Nachteil hierbei ist, dass das Fluid zur Sichtbarmachung gewöhnlich mit einer viel zu hohen Geschwindigkeit austritt und somit die Laminarströmung im Raum negativ beeinflusst. Außerdem entspricht die Austrittsrichtung häufig nicht der Richtung der Gasströmung. Des Weiteren tritt hierbei regelmäßig eine starke Drosselung des Fluids zur Sichtbarmachung auf. Dies führt dazu, dass kein schöner laminarer Rauchfaden ausgebildet wird, sondern instationäre Rauchballen bzw. Wölkchen.

Eine andere gebräuchliche Bauform ist ein etwa 3 bis 5 cm dickes Rohr mit geschlossenem Ende, an dessen Mantel längs der Rohrachse mehrere Bohrungen bzw. Perforationen angebracht sind, an denen die einzelnen Rauchstränge austreten sollen. Hier ergibt sich der Nachteil, dass das Rohr von der zu untersuchenden Gasströmung quer angeströmt wird, und an der Unterseite des Rohrs bildet sich daher eine Strömungsablösung bzw. Verwirbelungen, welche die Gasströmung verändern.

Durch die Absaugung einer Grenzschicht durch Absaugöffnungen können Strömungsablösungen und Verwirbelungen an einem Sondenrohr wirkungsvoll vermieden werden. Gasströmungen können mit einem solchen Sondenrohr sehr viel präziser sichtbar gemacht werden.

Bevorzugt ist, wenn das Querschnittsprofil des Sondenrohrs nach Art eines vollsymmetrischen Flugzeugflügelprofils gestaltet ist.

Bevorzugt ist das Querschnittsprofil symmetrisch geformt, also wie ein Flugzeugflügelprofil eines Steuerruders und nicht wie ein Flugzeugflügelprofil eines Flügels, welcher einen Auftrieb erzeugen soll.

In dem Sondenrohr ist mindestens ein von dem Versorgungskanal getrennter Absaugkanal angeordnet, welcher mit der mindestens einen Absaugöffnung verbunden sind.

Gegebenenfalls sind in dem Saugrohr mehrere Absaugkanäle angeordnet, die jeweils mit mindestens einer Absaugöffnung (bevorzugt jeweils mit mehreren Absaugöffnungen) verbunden sind. Der Absaugkanal ist bevorzugt fluidtechnisch durch eine fluiddichte Trennwand von dem Versorgungskanal getrennt. An den Absaugkanal ist bevorzugt eine Absaugvorrichtung angeschlossen, die einen Unterdruck in dem Absaugkanal erzeugen kann, so dass durch die Absaugöffnungen eine Absaugung der Grenzschicht erfolgt. Der mindestens eine Absaugkanal hat bevorzugt eine abgeflachte (insbesondere linsenförmige) Querschnittsfläche, die innerhalb des Querschnittprofils des Saugrohres angeordnet ist. Die Querschnittsfläche des mindestens einen Absaugkanals erstreckt sich bevorzugt entlang der Oberfläche des Saugrohres.

Darüber hinaus bevorzugt ist, wenn die mindestens eine Absaugöffnung an einer Seitenoberfläche des Sondenrohrs in Strömungsrichtung der Gasströmung vor der mindestens einen Austrittsöffnung angeordnet ist.

Besonders bevorzugt existiert eine höhere Anzahl an Absaugöffnungen als Austrittstrittsöffnungen an dem Sondenrohr. Besonders bevorzugt sind die Absaugöffnungen so angeordnet, dass über die gesamte Länge des Sondenrohrs gleichmäßig eine Absaugung der Grenzschicht durch die Absaugöffnungen erfolgen kann. In Strömungsrichtung der Gasströmung von der Anströmkante zur Abströmkante hinter den Absaugöffnungen/der Absaugung sind dann die Austrittsöffnungen angeordnet, mit denen gezielt (einzelne) und damit gut erkennbare fadenartige Strukturen (Rauchfäden/Nebelfäden) des Fluids zur Sichtbarmachung erzeugt werden können. Die Absaugöffnungen sind also bevorzugt so ausgebildet, dass sie über die gesamte Länge des Sondenrohrs gleichmäßig wirken und absaugen. Die Austrittöffnungen sind so ausgebildet, dass sie nur bereichsweise wirken bzw. klar von der umliegenden Gasströmung abgegrenzte Fäden entstehen, die damit gut sichtbar sind. Ein hydraulischer Querschnitt von Absaugöffnungen ist im Verhältnis zum hydraulischen Querschnitt von Austrittsöffnungen bevorzugt relativ klein.

Weiter bevorzugt ist, wenn die mindestens eine Absaugöffnung in einem hinteren Bereich der Seitenoberfläche näher an der Abströmkante als an der Anströmkante des Sondenrohrs angeordnet ist.

Besonders bevorzugt sind Absaugöffnungen in einem Bereich angeordnet, der sich um die Grenze zwischen einem mittleren Drittel und einem hinteren Drittel des Absaugrohres erstreckt. Besonders bevorzug existiert eine Vielzahl von Absaugöffnungen, die in einem sich über einen Abschnittder Länge des Querschnittsprofils erstreckenden Bereich verteilt sind. Dieser Bereich erstreckt sich beispielsweise über weniger als die Hälfte der Länge des Querschnittsprofils. Dieser Bereich erstreckt sich bevorzugt über mehr als ein Fünftel der Länge des Querschnittprofils. Weiter bevorzugt sind Absaugöffnungen versetzt zueinander angeordnet. Bevorzugt existieren mehrere in Richtung von der Anströmkante zur Abströmkante hintereinander angeordnete Reihen von Absaugöffnungen. Die einzelnen Absaugöffnungen der verschiedenen Reihen sind dabei bevorzugt jeweils versetzt zueinander angeordnet. So kann eine besonders gleichmäßige Absaugung der Grenzschicht erreicht werden. Bevorzugt entspricht der Abstand der (ausgehend von der Anströmkante) ersten Reihe von Absaugöffnungen zu der letzten Reihe von Absaugöffnungen der Länge des oben angegebenen Bereiches mit Absaugöffnungen.

Wie weiter oben schon beschrieben ist die Querschnittsfläche des mindestens einen Absaugkanals bevorzugt abgeflacht bzw. bevorzugt linsenförmig. Besonders bevorzugt erstreckt sich der mindestens eine Absaugkanals bzw. dessen Querschnittsfläche auf der Innenseite des Absaugrohres über den (gesamten) Bereich, in dem sich Absaugöffnungen befinden. Bevorzugt ist also eine Mehrzahl von Rehen von Absaugöffnungen an den mindestens einen Absaugkanal angeschlossen.

Außerdem bevorzugt ist, wenn das Sondenrohr auf beiden Seitenoberflächen des Querschnittsprofils jeweils mindestens eine Absaugöffnung aufweist.

Die Anordnungen von Absaugöffnungen auf den beiden (einander gegenüberliegenden) Seitenoberflächen des Sondenrohrs sind bevorzugt gleich oder zumindest ähnlich ausgeführt. Insbesondere, wenn das Querschnittsprofil symmetrisch ist, bietet sich eine symmetrische (auf beiden Seitenoberflächen des Sondenrohrs identisch ausgebildete) Anordnung von Absaugöffnungen an.

Besonders bevorzugt ist, wenn in dem Sondenrohr mindestens zwei Absaugkanäle angeordnet sind, wobei mindestens ein erster Absaugkanal mit an einer ersten Seitenoberfläche angeordneten Absaugöffnungen verbunden ist, wobei mindestens ein zweiter Absaugkanal mit an einer zweiten Seitenoberfläche angeordneten Absaugöffnungen verbunden ist.

Der Versorgungskanal liegt bevorzug in Richtung von der Anströmkante zur Abströmkante vor den Absaugkanälen während die Austrittsöffnungen hinter den Absaugkanälen liegen. Aus diesem Grund sind für Ansaugöffnungen an den beiden Seitenoberflächen bevorzugt voneinander getrennte Absaugkanäle vorgesehen. Hierdurch ist es möglich, dass zwischen den Absaugkanälen ein Durchtrittsbereich angeordnet sein kann, welcher eine Verbindung zwischen den Versorgungskanälen und den Austrittsöffnungen darstellt.

Darüber hinaus bevorzugt ist, wenn das Sondenrohr weiter eine Heizeinrichtung aufweist, mit welcher zumindest der Versorgungskanal beheizbar ist.

Die Vorrichtung bzw. das Sondenrohr weisen eine Heizeinrichtung auf. Mit der Heizeinrichtung kann das Sondenrohr beheizt werden. Durch die Zufuhr von Wärme mit der Heizeinrichtung können insbesondere Abkühleffekte, die durch eine Druckminderung des Fluids zur Sichtbarmachung beim Austritt aus der Austrittsöffnung auftreten, reduziert werden. Insbesondere kann verhindert werden, dass an dem Sondenrohr sich Tropfen des Fluids zur Sichtbarmachung ausbilden. Fluid zur Sichtbarmachung, welches bereits an dem Sondenrohr kondensiert, kann durch die Zufuhr von Wärme mit der Heizeinrichtung verdampft werden. Ein Abtropfen von derartigen Tropfen von den Sondenrohr kann verhindert werden. Durch die Heizeinrichtung wird insbesondere das Fluid zur Sichtbarmachung innerhalb des Versorgungskanals in dem Sondenrohr beheizt. Es hat sich herausgestellt, dass die Beheizung des Fluids zur Sichtbarmachung in dem Versorgungskanal geeignet ist, um eine Bildung von Kondensat/Tropfen des Fluids zur Sichtbarmachung an den Austrittsöffnungen zu verhindern. Durch die Heizeinrichtung kann insbesondere auch vermieden werden, dass eine Kondensation des Fluids zur Sichtbarmachung bzw. von Bestandteilen des Fluids zur Sichtbarmachung bereits innerhalb des Sondenrohrs (in dem Versorgungskanal) stattfindet.

Ein wesentlicher Vorteil der hier beschriebenen Vorrichtung wird durch die Kombination der Beheizbarkeit des Sondenrohrs mit der abgeflachten Form des Querschnittsprofils erreicht.

Außerdem bevorzugt ist, wenn die Abströmkante im Bereich der mindestens einen Austrittsöffnung durch ein Austrittsrohr unterbrochen ist, welches die Austrittsöffnung bildet und welches mit dem Versorgungskanal verbunden ist.

Darüber hinaus bevorzugt ist, wenn das Sondenrohr eine Mehrzahl von Austrittöffnungen aufweist, die über den Versorgungskanal mit Fluid versorgt werden.

Die Abströmkante ist bevorzugt durch zwei in einem flachen Winkel (von bspw. weniger als 15 Winkelgrad) aufeinander zulaufende Seitenoberflächen des Sondenrohrs gebildet. Die Achse von die Austrittsöffnungen bildenden Austrittsrohre schneidet bevorzugt diese Abströmkante. Die Austrittsrohre sind bevorzugt in Richtung von der Anströmkante zu der Abströmkante des Sondenrohrs ausgerichtet.

Darüber hinaus bevorzugt ist, wenn das Sondenrohr eine Mehrzahl von Austrittöffnungen aufweist, die über den Versorgungskanal mit Fluid versorgt werden.

Das Sondenrohr hat bevorzugt eine Mehrzahl von Austrittsöffnungen, die entlang des Sondenrohrs in einem festen Abstand zueinander angeordnet sind, so dass ausgehend von den Austrittsöffnungen eine gleichmäßige Anordnung von sichtbaren Fäden und/oder Spuren des Fluids zur Sichtbarmachung in der Gasströmung entsteht. Der Abstand der einzelnen Austrittsöffnungen beträgt bevorzugt zwischen 20 mm und 50 mm.

Weiter bevorzugt ist es, wenn innerhalb des Sondenrohrs Verteilstrukturen angeordnet sind, die eine Vergleichmäßigung der Bereitstellung des Fluids an die Mehrzahl von Austrittsöffnungen unterstützen.

Verteilstrukturen können beispielsweise Strukturen innerhalb des Sondenrohrs sein, die die Strömung des Fluids zur Sichtbarmachung in dem Versorgungskanal abbremsen und/oder verwirbeln. Solche Verteilstrukturen können zur gleichmäßigen Verteilung des Fluids zur Sichtbarmachung auf mehrere AustrittsÖffnungen beitragen.

Besonders bevorzugt können derartige Verteilstrukturen auch Stützstrukturen sein. Das Sondenrohr ist bevorzugt (um einen geringen Querschnitt aufzuweisen) sehr dünnwandig ausgeführt. Aus diesem Grund ist es vorteilhaft, wenn innerhalb des Sondenrohrs Stützstrukturen bzw. Versteifungsstrukturen angeordnet sind, die die Stabilität des Sondenrohrs erhöhen, wobei gleichzeitig ein großes inneres Volumen des Sondenrohrs erreicht wird.

Darüber hinaus bevorzugt ist, wenn die mindestens eine Austrittsöffnung zu dem Raum hin derart geformt ist, dass ein in dem Versorgungskanal vorliegender Druck, welcher gegenüber dem Druck in dem Raum erhöht ist, ausgeglichen wird und der Druck von an der mindestens einen Austrittsöffnung austretendem Fluid auf den Druck in dem Raum angepasst wird.

Bevorzugt wird das Fluid zur Sichtbarmachung mit einem gewissen Überdruck gegenüber dem Druck in dem Raum in den Versorgungskanal befördert. Dieser Überdruck dient dazu das Fluid zur Sichtbarmachung durch den Versorgungskanal und die Austrittsöffnungen zu fördern und das Fluid zur Sichtbarmachung an den Austrittsöffnungen bevorzugt auch so zu beschleunigen, dass die Geschwindigkeit des Fluids zur Sichtbarmachung an die Geschwindigkeit der Gasströmung angepasst ist, die sichtbar gemacht werden soll. Bevorzugt kann ein solcher Überdruck auch angepasst werden, um die Vorrichtung und die Bereitstellung des Fluids zur Sichtbarmachung genau an die jeweils zu untersuchende Gasströmung anzupassen.

Bei üblichen, mit der beschriebenen Vorrichtung untersuchten Gasströmungen sind beispielsweise Überdrücke, mit denen das Fluid zur Sichtbarmachung in den Versorgungskanal gefördert werden im Bereich zwischen 0,1 Pa und 0,3 Pa sinnvoll.

In diesem Zusammenhang kann insbesondere ein sogenannter isokinetischer Austritt des Fluids zur Sichtbarmachung aus den Austrittsöffnungen angestrebt sein. Der Druck und die Geschwindigkeit des Fluids zur Sichtbarmachung an den Austrittsöffnungen ist bevorzugt (möglichst) exakt an den Druck und die Geschwindigkeit der Gasströmung angepasst, die sichtbar gemacht werden soll.

Besonders bevorzugt ist auch die Form der Austrittsöffnungen derart gestaltet, dass die Geschwindigkeit des Fluids an die Geschwindigkeit der sichtbar zu machenden Gasströmung in besonders vorteilhafter Weise angepasst wird. Bevorzugt verengt sich der Querschnitt von Austrittsöffnungen nach außen etwas, so dass das Fluid zur Sichtbarmachung beim Austritt aus den Austrittsöffnungen beschleunigt wird. Ein (eventuell vorhandener) Überdruck in dem Versorgungskanal kann dabei abgebaut werden.

Weiter bevorzugt ist, wenn das Sondenrohr mit einem 3D-Druckverfahren hergestellt ist.

Besonders bevorzugt ist, wenn das Sondenrohr mit einem 3D-Druckverfahren hergestellt ist, mit welchem mindestens zwei verschiedene Kunststoffe verarbeitet werden können, wobei ein erster Kunststoff ein elektrisch nicht leitender Kunststoff ist und wobei ein zweiter Kunststoff ein elektrisch leitender Kunststoff ist.

Mit einem 3D-Druckverfahren lassen sich in besonders vorteilhafter Art auch Verteilstrukturen innerhalb des Sondenrohrs ausbilden, welche bevorzugt auch Stützstrukturen und/oder Versteifungsstrukturen des Sondenrohrs bilden. 3D-Druckverfahren sind insbesondere auch geeignet, um die Strukturen bzw. Trennwände zur Trennung des Versorgungskanals und des Absaugkanals in dem Sondenrohr auszubilden.

Besonders bevorzugt ist, wenn das Sondenrohr aus mindestens einem Sondenrohrelement gebildet ist, welches mit weiteren Sondenrohrelementen zusammensetzbar ist.

Außerdem bevorzugt ist, wenn das Sondenrohr mindestens ein Flanschelement aufweist, welches einen Griff hat und an welchem ein Versorgungsanschluss ausgebildet ist, mit welchem das Sondenrohr mit dem Fluid zur Sichtbarmachung versorgt werden kann.

Bevorzugt ist auch ein elektrischer Anschluss zur Versorgung der Heizeinrichtung des Sondenrohres mit elektrischem Strom an dem Flanschelement angeordnet.

Bevorzugt besteht die Vorrichtung bzw. das vollständige Sondenrohr aus dem Flanschelement mit dem Griff zur Bedienung der Vorrichtung durch einen Bediener sowie mit den notwendigen Anschlüssen zur Versorgung des Sondenrohrs mit Fluid zur Sichtbarmachung bzw. mit elektrischem Strom zur Beheizung sowie aus mindestens einem Sondenrohrelement, so wie ggf. noch aus einem Endstück, mit welchem das Sondenrohr an dem dem Flanschelement gegenüberliegenden Ende verschlossen werden kann. Je nachdem welche Länge eines Sondenrohrs für die jeweilige, mit dem Sondenrohr durchzuführende Untersuchung benötigt wird können ein oder mehrere Sondenrohrelemente zusammengesetzt sein, um das (komplette) Sondenrohr zu bilden.

Die Sondenrohrelemente haben bevorzugt an ihren beiden Enden jeweils Anschlussflansche, welche den Anschluss weiterer Sondenrohrelemente und/oder den Anschluss des Flanschelementes und/oder des Endstückes ermöglichen. Bevorzugt existieren an den Sondenrohrelementen bzw. den Anschlussflanschen der Sondenrohrelemente und an dem Flanschelement jeweils Konnektoren, mit welchen die Elektroden zur Bestromung des elektrisch leitfähigen Polymermaterials bzw. zur Bestromung des Heizelementes bzw. der Heizeinrichtung miteinander verbunden werden können, damit ein elektrischer Strom zur Versorgung der Heizeinrichtung über die Anschlussflansche von Sondenrohrelement zur Sondenrohrelement fließen kann. Bevorzugt sind die Anschlussflansche der Sondenrohrelemente darüber hinaus so ausgeführt, dass ein Versorgungskanal zur Versorgung der Austrittsöffnungen mit Fluid zur Sichtbarmachung über die Anschlussflansche zwischen den einzelnen Sondenrohrelementen verbunden wird.

Sondenrohrelemente haben beispielsweise eine Länge zwischen 150 mm und 350 mm, beispielsweise ca. 250 mm. Es können beispielsweise vier Sondenrohrelemente von dieser Länge zusammen gesteckt werden, um ein Sondenrohr mit einer Gesamtlänge von ca. 1 Meter zu bilden.

Hier auch beschrieben werden soll ein Verfahren zum Untersuchen einer Gasströmung in einem Raum mit einer beschriebenen Vorrichtung aufweisend folgende Schritte:
a) Anordnen des Sondenrohrs in dem Raum derart, dass das abgeflachte Querschnittsprofil an der Gasströmung ausgerichtet ist;
b) Bereitstellen von Fluid zur Sichtbarmachung der Gasströmung durch die mindestens eine Austrittsöffnung des Sondenrohrs;
c) Absaugen einer Grenzschicht der Gasströmung um das Sondenrohr herum über eine mit einem Absaugkanal verbundene Ansaugöffnung, um Turbulenzen der Gasströmung zu reduzieren.

Außerdem bevorzugt ist, wenn eine Absauggeschwindigkeit mit der die Grenzschicht in Schritt c) abgesaugt wird, auf eine Geschwindigkeit der um das Sondenrohr herum strömenden Gasströmung abgestimmt ist.

Bevorzugt sind (gegenüber einem Druck in der Gasströmung in dem Raum) Unterdrücke, mit denen die Grenzschicht durch die Absaugöffnung abgesaugt wird, deutlich stärker ausgeprägt als Überdrücke, mit denen das Fluid zur Sichtbarmachung durch die Austrittsöffnungen gefördert wird. Unterdrücke, die in einem Absaugkanal wirken stören die Gasströmung nicht, sondern bewirken nur die Absaugung der Grenzschicht. Aus diesem Grunde können Absaugöffnungen auch deutlich kleiner (mit einem kleineren hydraulischen Durchmesser) ausgeführt sein als Austrittsöffnungen.

Es soll darauf hingewiesen werden, dass die im Zusammenhang mit der vorstehend beschriebenen Vorrichtung geschilderten besonderen Vorteile und Ausgestaltungsmerkmale auch für das im Folgenden beschriebene Verfahren anwendbar und übertragbar sind.

Die Erfindung sowie das technische Umfeld der Erfindung werden nachfolgend anhand der Figuren näher erläutert. Die Figuren zeigen ein bevorzugtes Ausführungsbeispiel, auf welche die Erfindung nicht beschränkt ist. Es ist darauf hinzuweisen, dass die Figuren und die in den Figuren dargestellten Größenverhältnisse nur schematisch sind. Es zeigen beispielhaft und schematisch:
Fig. 1: eine beschriebene Vorrichtung zur Sichtbarmachung von Gasströmungen;
Fig. 2: ein Sondenrohr einer beschriebenen Vorrichtung in einer dreidimensionalen Ansicht;
Fig. 3: ein Querschnitt durch das Sondenrohr gemäß Fig. 2; und
Fig. 4: schematisch eine Gasströmung, die um ein Sondenrohr herum strömt und die mit Hilfe einer beschriebenen Vorrichtung sichtbar gemacht werden kann.

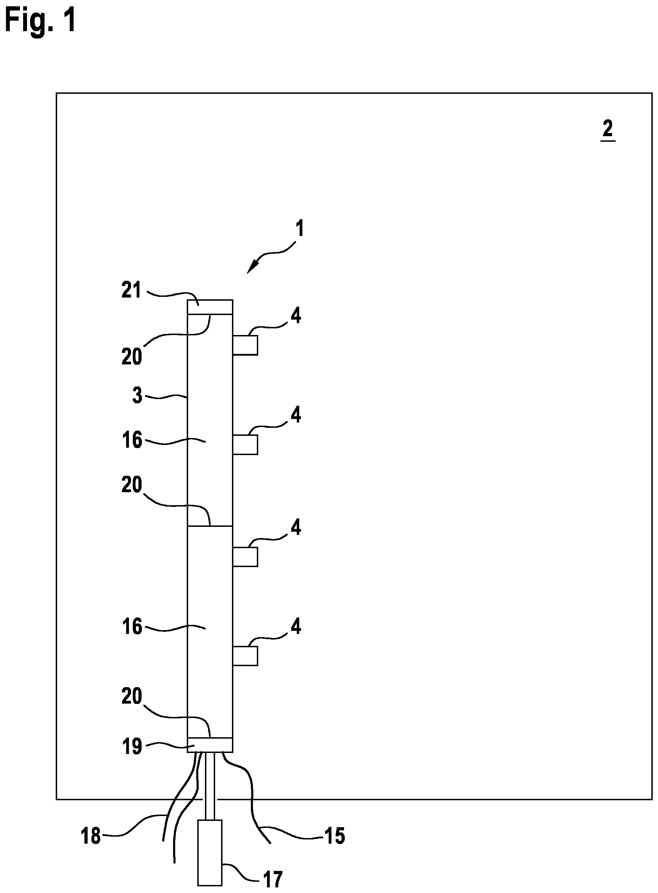

Die Fig. 1 zeigt die hier beschriebene Vorrichtung 1 zur Sichtbarmachung von Gasströmungen 24. Die Vorrichtung 1 umfasst ein Sondenrohr 3, welches in einem Raum 2 (bspw. einem Reinraum) eingebracht werden kann. Das Sondenrohr 3 hat Austrittsöffnungen 4, aus welchen ein gasförmiges Fluid zur Sichtbarmachung von Gasströmungen 24 in den Raum 2 eingebracht werden kann. Die Austrittsöffnungen 4 sind hier schematisch angedeutet. Dieses gasförmige Fluid kann (wie weiter oben beschrieben) bspw. Nebel oder Rauch sein. Das Sondenrohr 3 ist bevorzugt (wie hier auch dargestellt) dazu ausgebildet von einem Bediener von Hand innerhalb des Raumes 2 bewegt werden zu können und bspw. so ausgerichtet werden zu können, dass ein Querschnittsprofil des Sondenrohrs 3 gemäß der Strömungsrichtung der Gasströmung 24 in dem Raum 2 ausgerichtet ist. Dann erfolgt eine besonders gleichmäßige Einbringung des Fluids in den Raum 2 bzw. in die Gasströmung 24. Dafür kann das Sondenrohr 3 der Vorrichtung 1 einen Griff 17 aufweisen, über welchen ein Bediener das Sondenrohr 3 bzw. die Vorrichtung 1 in dem Raum 2 halten und bewegen kann.

Bevorzugt ist das Sondenrohr 3 aus mehreren (bevorzugt baugleichen) Sondenrohrelementen 16 zusammengesetzt, die an ihren Enden jeweils zusammengesteckt werden können. So kann die Länge des Sondenrohrs 3 für den jeweiligen Anwendungsfall zur Sichtbarmachung einer Gasströmung 24 angepasst werden.

Bevorzugt umfasst die Vorrichtung 1 auch ein Flanschelement 19. Das Flanschelement 19 ist bevorzugt an ein Ende des Sondenrohrs 3 bzw. an ein Ende eines Sondenrohrelementes 16 angeschlossen. Bevorzugt ist der Griff 17 an diesem Flanschelement 19 ausgebildet. Bevorzugt weist das Flanschelement 19 weiter auch einen elektrischen Anschluss 15 auf, über welchen das Sondenrohr 3 mit elektrischer Energie zum Betrieb der darin angeordneten Heizeinrichtung 9 versorgt werden kann. Bevorzugt weist das Flanschelement 19 darüber hinaus auch eine Fluidzuführung 18 auf, über welche das Fluid zur Sichtbarmachung von Gasströmungen 24 in das Sondenrohr 3 eingebracht werden kann.

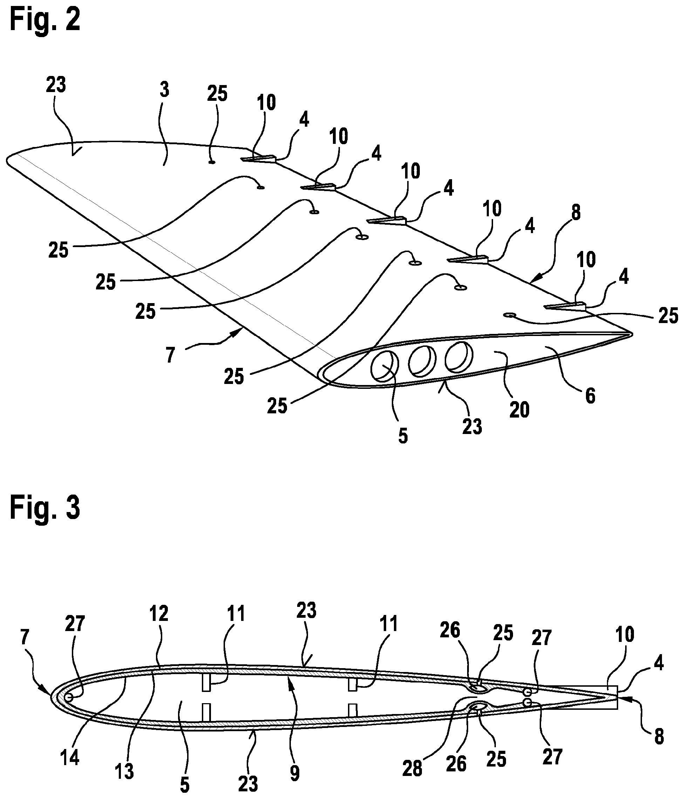

Die Fig. 2 zeigt das Sondenrohr 3 bzw. ein Sondenrohrelement 16, von welchem mehrere zu einem Sondenrohr 3 zusammen gesteckt werden können in einer dreidimensionalen Ansicht. Zu erkennen sind ein Sondenrohr 3 einer beschriebenen Vorrichtung 1 in einer dreidimensionalen Ansicht. Zu erkennen ist, dass das Sondenrohr 3 ein Querschnittsprofil 6 hat, welches stromlinienförmig gestaltet ist und welches an die Form eines Flugzeugflügelprofils angelehnt ist. Ein Sondenrohr 3 mit einem derartigen Querschnittsprofil 6 kann in einer Gasströmung 24 in einem Raum 2 derart ausgerichtet werden, dass der Einfluss des Sondenrohrs 3 selbst auf die Gasströmung 24 gering bzw. ggf. sogar minimal ist. Das Querschnittsprofil 6 des Sondenrohrs 3 hat eine Anströmkante 7 und eine Abströmkante 8. Bevorzugt ist die Anströmkante 7 abgerundet ausgeführt, während die Abströmkante 8 spitz zuläuft. Eine derartige Form hat einen besonders geringen Strömungswiederstand für eine die Form umströmende Strömung. Das Sondenrohr 3 sorgt aufgrund seines Querschnittsprofils 6 für wenig Verwirbelungen und/oder Umformungen der Gasströmung 24. Mit dem Sondenrohr 3 wird das Fluid zur Sichtbarmachung der Gasströmung 24 bevorzugt derart in die Gasströmung 24 eingebracht, dass die Gasströmung 24 durch das Sondenrohr 3 bzw. die Einbringung möglichst wenig beeinflusst wird. Bevorzugt wird das Sondenrohr 3 derart in die Gasströmung 24 eingebracht, dass die Richtung von der Anströmkante 7 zu der Abströmkante 8 der Richtung der Gasströmung 24 entspricht.

Die Austrittsöffnungen 4 sind an der Abströmkante 8 angeordnet. Da die Abströmkante 8 (wie weiter oben schon beschrieben) spitz zuläuft und vor dem Hintergrund, dass die Austrittsöffnungen 4 einen ausreichenden Querschnitt zum Austritt des Fluids zur Sichtbarmachung aufweisen, ist die Abströmkante 8 bei den Austrittsöffnungen 4 bevorzugt erweitert und/oder unterbrochen. Besonders bevorzugt treten an der Abströmkante 8 Austrittsrohre 10 aus dem Sondenrohr 3 aus, die jeweils die Austrittsöffnungen 4 bilden.

In Fig. 2 auch zu sehen ist, dass das dort dargestellte Sondenrohrelement 16 Anschlussflansche 20 hat, an welchen es mit weiteren Sondenrohrelementen 16 und/oder (wie in Fig. 1 dargestellt) mit einem Endstück 21 oder einem Flanschelement 19 zusammengesteckt werden kann, um das vollständige Sondenrohr 3 bzw. die Vorrichtung 1 aufweisend ein Sondenrohr 3 zu bilden. Die Anschlussflansche 20 sind bevorzugt so ausgeführt, dass die Sondenrohrelemente 16 bzw. das Flanschelement 19 und/oder das Endstück 21 formschlüssig und stabil miteinander verbunden werden können. Hier zu sehen ist, dass das Sondenrohrelement 16 an dem Anschlussflansch 20 drei Öffnungen aufweist, wobei durch eine der drei Öffnungen ein Versorgungskanal 5 zur Versorgung der Austrittsöffnungen 4 mit dem Fluid zur Sichtbarmachung verläuft. Die anderen Öffnungen können bspw. dazu genutzt werden weitere Verbindungen zwischen den einzelnen Sondenrohrelementen 16 herzustellen - bspw. eine elektrische Verbindung zur Versorgung einer Heizeinrichtung 9 in dem Sondenrohr 3 bzw. in dem Sondenrohrelement 16 mit elektrischer Energie.

In Fig 2 weiter zu sehen sind Absaugöffnungen 25, welche sich an Seitenoberflächen 23 des Sondenrohrs 3 befinden. Durch diese Absaugöffnungen 25 kann eine Grenzschicht 22 der das Sondenrohr 3 umströmenden Gasströmung 24 abgesaugt werden. Hierdurch kann ein laminares Strömungsprofil der Gasströmung 24 beim Umströmen des Sondenrohrs 3 aufrecht erhalten werden. Insbesondere kann vermieden werden, dass durch das Sondenrohr 3 Verwirbelungen und/oder Turbulenzen in der Gasströmung 24 hervorgerufen werden. Solche Verwirbelungen und/oder Turbolenzen verfälschen die mit dem Sondenrohr 3 bzw. dem Fluid zur Sichtbarmachung sichtbar gemachte Gasströmung 24.

Die Fig. 3 zeigt einen Querschnitt durch das Sondenrohr 3 bzw. das Sondenrohrelement 16 gemäß Fig. 2. In Fig. 3 ist also die Querschnittsfläche 6 des Sondenrohrs 3 zu erkennen. In Fig. 3 zu sehen ist, dass das Sondenrohr 3 zwischen der Anströmkante 7 und der Abströmkante 8 erweitert ist und einen Innenraum aufweist, der zumindest teilweise (ggf. vollständig) einen Versorgungskanal 5 bildet, durch welchen Fluid zur Sichtbarmachung den Austrittsöffnungen 4 zugeführt werden kann. In Fig. 3 auch nochmal deutlich zu erkennen ist, wie die Austrittsöffnungen 4 an der Abströmkante 8 mit Austrittsrohren 10 gebildet sind. Innerhalb des Innenraums des Sondenrohrs 3 bzw. innerhalb des Versorgungskanals 5 können Verteilstrukturen 11 gebildet sein, die eine gleichmäßige Versorgung der Austrittsöffnungen 4 mit dem Fluid zur Sichtbarmachung bewirken können. Mit einer gleichmäßigen Versorgung ist hier insbesondere gemeint, dass bevorzugt an allen Austrittsöffnungen 4 des Sondenrohrs 3 gleich viel Fluid zur Sichtbarmachung und unter den gleichen Austrittsbedingungen (Austrittsgeschwindigkeit und Druck) austritt.

In Fig. 3 weiter zu erkennen ist, dass das Sondenrohr 3 bevorzugt einen mehrschichtigen Aufbau aufweist. Zu erkennen ist, dass das Sondenrohr 3 eine Außenschicht 12 aufweist, die bevorzugt aus einem formstabilen Kunststoff gebildet ist. Zu erkennen ist weiter, dass das Sondenrohr 4 eine Innenschicht 13 aufweist, die bevorzugt aus einem elektrisch leitfähigen Kunststoff gebildet ist und die eine Heizeinrichtung 9 bzw. ein Heizelement 14 einer Heizeinrichtung 9 ausbildet. Bevorzugt ist in dem Innenraum des Sondenrohrs 3 an der Innenschicht 13 im Bereich der Anströmkante 7 mindestens eine erste Elektrode 27 angeschweißt. Besonders bevorzugt ist in dem Innenraum des Sondenrohrs 3 an der Innenschicht 13 im Bereich der Abströmkante 8 mindestens eine zweite Elektrode 27 angeschweißt. Bei der hier dargestellten Ausführungsvariante sind im Bereich der Abströmkante 8 zwei zweite Elektroden 27 angeschweißt, so dass zwischen den beiden zweiten Elektroden 27 das Fluid zur Sichtbarmachung noch von dem Versorgungskanal 5 zu den Austrittsöffnungen 4 überströmen kann. Eine Beheizung der Innenschicht 13 aus elektrisch leitfähigem Kunststoff kann dadurch erfolgen, dass zwischen ersten Elektroden 27 und zweiten Elektroden 27 ein elektrischer Strom angelegt wird. Durch die (möglichst vollständige) Ausbildung einer Innenschicht 13 aus einem elektrisch leitfähigen Kunststoff bzw. als Heizelement 14 einer Heizeinrichtung 9 kann eine besonders gleichmäßige Beheizung des Sondenrohrs 3 erreicht werden. Die Abkühlung des Sondenrohrs 3 sowie die Bildung von Kondensat können so effektiv vermieden werden.

In Fig. 3 auch gezeigt sind Absaugöffnungen 25 an Seitenoberflächen 23 des Sondenrohrs 3. Die Absaugöffnungen 25 sind mit Absaugkanälen 26 in dem Sondenrohr 3 verbunden. Über die Absaugkanäle 26 wird ein Unterdruck an den Absaugöffnungen 25 erzeugt, über welchen die an dem Sondenrohr 3 bzw. an den Seitenoberflächen 23 des Sondenrohrs 3 anliegende Grenzschicht 22 der Gasströmung 24 abgesaugt werden kann. Bevorzugt existieren für beide Seitenoberflächen 23 voneinander getrennte Absaugkanäle 26. Die an einer ersten Seitenoberfläche 23 angeordneten Absaugöffnungen 25 sind bevorzugt mit einem ersten Absaugkanal 26 verbunden. Die an einer zweiten Seitenoberfläche 23 angeordneten Absaugöffnungen 25 sind bevorzugt mit einem zweiten Absaugkanal 26 verbunden. Die Absaugkanäle 26 sind bevorzugt mit einer abgeflachten (ggf. linsenförmigen) Querschnittsfläche ausgeführt. Bevorzugt existiert zwischen den Absaugkanälen 26 ein (freier) Durchtrittsbereich 28, durch welchen das Fluid zur Sichtbarmachung von dem Versorgungskanal 5 zu den Austrittsöffnungen 4 übertreten kann.

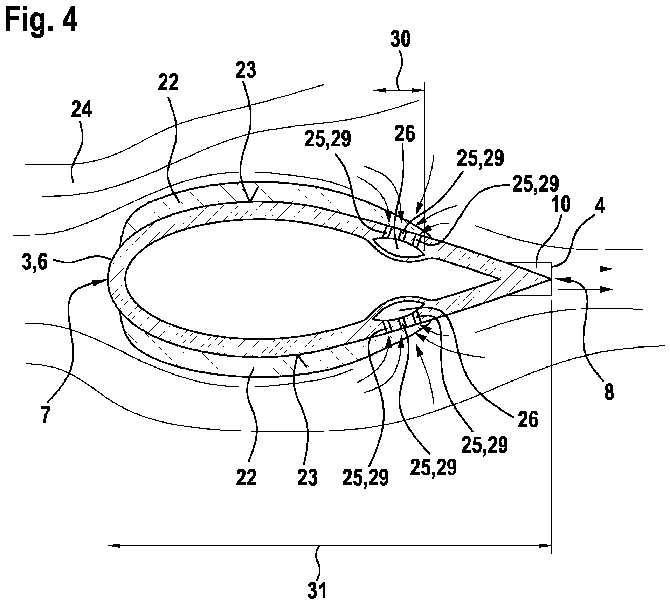

Die Fig. 4 zeigt schematisch eine Gasströmung 24, die um ein Sondenrohr 3 herum strömt und die mit Hilfe einer beschriebenen Vorrichtung sichtbar gemacht werden kann. In der Fig. 4 ist (wie in Fig. 3) beispielhaft die Querschnittsfläche 6 des Sondenrohrs 3 gezeigt. Die Gasströmung 24 bildet an den Seitenoberflächen 23 des Sondenrohrs 3 eine Grenzschicht 22 aus. Im Bereich der Grenzschicht 22 ist die Gasströmung 24 durch die Reibung an den Seitenoberflächen 23 des Sondenrohrs 3 beeinträchtigt. Im Bereich der Anströmkante 7 ist die Grenzschicht 22 noch sehr dünn. Ausgehend von der Anströmkante 7 hin zur Abströmkante 8 wird diese Grenzschicht 22 immer dicker. Insbesondere in dem zur Abströmkante 8 hin ausgerichteten Bereich, in dem sich das Sondenrohr 3 wieder verjüngt, kann die Grenzschicht 22 so dick werden, dass eine sogenannte Grenzschichtablösung auftritt. Eine solche Grenzschichtablösung kann Turbolenzen hervorrufen, die eine erhebliche Störung der Strömungsbedingung der Gasströmung 24 bewirken. Durch die Grenzschichtabsaugung durch die Absaugöffnungen 25 kann die Dicke der Grenzschicht 22 in diesem Bereich kontrolliert werden. Insbesondere kann die Laminarität der Gasströmung 24 verbessert werden. In Fig. 4 auch dargestellt ist, dass mehrere Reihen 29 von Absaugöffnungen 25 existieren können, die eine Bereichslänge 30 einen Absaugbereiches bilden, welcher sich von einer (ausgehend von der Anströmkante 7) ersten Reihe 29 von Absaugöffnungen 25 bis hin zu einer letzten bzw. hintersten Reihe 29 von Absaugöffnungen 25 erstreckt. Die Bereichslänge 30 entspricht bevorzugt zwischen 1/2 und 1/5 einer Gesamtlänge 31 des Sondenrohrs 3 bzw. des Querschnittsprofils 6 des Sondenrohrs 3 von der Anströmkante 7 bis zur Abströmkante 8.

### Bezugszeichenliste

- 1: Vorrichtung
- 2: Raum
- 3: Sondenrohr
- 4: Austrittsöffnung
- 5: Versorgungskanal
- 6: Querschnittsprofil
- 7: Anströmkante
- 8: Abströmkante
- 9: Heizeinrichtung
- 10: Austrittsrohr
- 11: Verteilstruktur
- 12: Außenschicht
- 13: Innenschicht
- 14: Heizelement
- 15: elektrischer Anschluss
- 16: Sondenrohrelement
- 17: Griff
- 18: Fluidzuführung
- 19: Flanschelement
- 20: Anschlussflansch
- 21: Endstück
- 22: Grenzschicht
- 23: Seitenoberfläche
- 24: Gasströmung
- 25: Absaugöffnung
- 26: Absaugkanal
- 27: Elektrode
- 28: Durchtrittsbereich
- 29: Reihe
- 30: Bereichslänge
- 31: Gesamtlänge

## Patentansprüche

1. Vorrichtung (1) zur Sichtbarmachung von Gasströmungen (24) in einem Raum (2) aufweisend ein Sondenrohr (3), welches dazu eingerichtet ist sich in den Raum (2) hinein zu erstrecken, wobei das Sondenrohr (3) mindestens eine Austrittsöffnung (4) aufweist, über welche eine dosierte Zugabe eines Fluids zur Sichtbarmachung der Gasströmungen (24) in den Raum (2) möglich ist, wobei in dem Sondenrohr (3) ein Versorgungskanal (5) zum Versorgen der mindestens einen Austrittsöffnung (4) mit Fluid angeordnet ist, wobei das Sondenrohr (3) eine abgeflachtes Querschnittsprofil (6) mit einer Anströmkante (7) und einer Abströmkante (8) aufweist und wobei die Austrittsöffnung (4) im Bereich der Abströmkante (8) an dem Sondenrohr (3) angeordnet ist, **dadurch gekennzeichnet, dass** das Sondenrohr (3) weiter mindestens eine Absaugöffnung (25) aufweist, durch welche eine Grenzschicht (22) einer Gasströmung (24) um das Sondenrohr (3) herum absaugbar ist, um Turbulenzen der Gasströmung (24) zu reduzieren, wobei in dem Sondenrohr (3) mindestens ein von dem Versorgungskanal (5) getrennter Absaugkanal (26) angeordnet ist, welcher mit der mindestens einen Absaugöffnung (25) verbunden sind.

2. Vorrichtung (1) nach Anspruch 1, wobei das Querschnittsprofil (6) des Sondenrohrs (3) nach Art eines vollsymmetrischen Flugzeugflügelprofils gestaltet ist.

3. Vorrichtung (1) nach einem der vorhergehenden Ansprüche, wobei die mindestens eine Absaugöffnung (25) an einer Seitenoberfläche (23) des Sondenrohrs (3) in Strömungsrichtung der Gasströmung (24) vor der mindestens einen Austrittsöffnung (4) angeordnet ist.

4. Vorrichtung (1) nach einem der vorhergehenden Ansprüche, wobei die mindestens eine Absaugöffnung (25) in einem hinteren Bereich der Seitenoberfläche (23) näher an der Abströmkante (8) als an der Anströmkante (7) des Sondenrohrs (3) angeordnet ist.

5. Vorrichtung (1) nach einem der vorhergehenden Ansprüche, wobei das Sondenrohr (3) auf beiden Seitenoberflächen (23) des Querschnittsprofils (6) jeweils mindestens eine Absaugöffnung (25) aufweist.

6. Vorrichtung (1) nach Anspruch 5, wobei in dem Sondenrohr (3) mindestens zwei Absaugkanäle (26) angeordnet sind, wobei mindestens ein erster Absaugkanal (26) mit an einer ersten Seitenoberfläche (23) angeordneten Absaugöffnungen (25) verbunden ist, wobei mindestens ein zweiter Absaugkanal (26) mit an einer zweiten Seitenoberfläche (23) angeordneten Absaugöffnungen (25) verbunden ist.

7. Vorrichtung (1) nach einem der vorhergehenden Ansprüche, wobei das Sondenrohr (3) weiter eine Heizeinrichtung (9) aufweist, mit welcher zumindest der Versorgungskanal (5) beheizbar ist.

8. Vorrichtung (1) nach einem der vorhergehenden Ansprüche, wobei die Abströmkante (8) im Bereich der mindestens einen Austrittsöffnung (4) durch ein Austrittsrohr (10) unterbrochen ist, welches die Austrittsöffnung (4) bildet und welches mit dem Versorgungskanal (5) verbunden ist.

9. Vorrichtung (1) nach einem der vorhergehenden Ansprüche, wobei das Sondenrohr (3) eine Mehrzahl von Austrittöffnungen (4) aufweist, die über den Versorgungskanal (5) mit Fluid versorgt werden.

10. Vorrichtung (1) nach Anspruch 9, wobei Absaugöffnungen (25) jeweils Austrittöffnungen (4) räumlich zugeordnet sind, um die Strömung der Gasströmung (24) um das Sondenrohr (3) herum im Bereich der Austrittsöffnungen (4) zu vergleichsmäßigen.

11. Vorrichtung (1) nach einem der vorhergehenden Ansprüche, wobei das Sondenrohr (3) mit einem 3D-Druckverfahren hergestellt ist.

12. Vorrichtung (1) nach einem der vorhergehenden Ansprüche, wobei das Sondenrohr (3) aus mindestens einem Sondenrohrelement (16) gebildet ist, welches mit weiteren Sondenrohrelementen (16) zusammensetzbar ist.

13. Verfahren zum Untersuchen einer Gasströmung (24) in einem Raum (2) mit einer Vorrichtung (1) gemäß einem der Ansprüche 1 bis 12 aufweisend folgende Schritte:
a) Anordnen des Sondenrohrs (3) in dem Raum derart, dass das abgeflachte Querschnittsprofil (6) an der Gasströmung (24) ausgerichtet ist;
b) Bereitstellen von Fluid zur Sichtbarmachung der Gasströmung (24) durch die mindestens eine Austrittsöffnung (4) des Sondenrohrs (3);
c) Absaugen einer Grenzschicht (22) der Gasströmung (24) um das Sondenrohr (3) herum über eine mit einem Absaugkanal (26) verbundene Absaugöffnung (25) um Turbulenzen der Gasströmung (24) zu reduzieren.

## Claims

1. Device (1) for visualizing gas flows (24) in a room (2) having a probe tube (3) which is configured to extend into the room (2), wherein the probe tube (3) has at least one outlet opening (4) via which a fluid for visualizing the gas flows (24) can be admitted into the room (2) in a metered manner, wherein a supply channel (5) for supplying the at least one outlet opening (4) with fluid is arranged in the probe tube (3), wherein the probe tube (3) has a flattened cross-sectional profile (6) with a leading edge (7) and a trailing edge (8), and wherein the outlet opening (4) is arranged on the probe tube (3) in the region of the trailing edge (8),
**characterized in that** the probe tube (3) further has at least one suction opening (25) through which a boundary layer (22) of a gas flow (24) around the probe tube (3) can be suctioned in order to reduce turbulence of the gas flow (24), wherein at least one suction channel (26) which is separate from the supply channel (5) and which is connected to the at least one suction opening (25) is arranged in the probe tube (3).

2. Device (1) according to claim 1, wherein the cross-sectional profile (6) of the probe tube (3) is designed in the manner of a fully symmetrical aircraft wing profile.

3. Device (1) according to either of the preceding claims, wherein the at least one suction opening (25) is arranged on a lateral surface (23) of the probe tube (3) upstream of the at least one outlet opening (4) in the flow direction of the gas flow (24).

4. Device (1) according to any of the preceding claims, wherein the at least one suction opening (25) is arranged in a rear region of the lateral surface (23) closer to the trailing edge (8) than to the leading edge (7) of the probe tube (3).

5. Device (1) according to any of the preceding claims, wherein the probe tube (3) has at least one suction opening (25) on each of the two lateral surfaces (23) of the cross-sectional profile (6).

6. Device (1) according to claim 5, wherein at least two suction channels (26) are arranged in the probe tube (3), wherein at least one first suction channel (26) is connected to suction openings (25) arranged on a first lateral surface (23), wherein at least one second suction channel (26) is connected to suction openings (25) arranged on a second lateral surface (23).

7. Device (1) according to any of the preceding claims, wherein the probe tube (3) further has a heating device (9) with which at least the supply channel (5) can be heated.

8. Device (1) according to any of the preceding claims, wherein the trailing edge (8) is interrupted in the region of the at least one outlet opening (4) by an outlet tube (10) which forms the outlet opening (4) and which is connected to the supply channel (5).

9. Device (1) according to any of the preceding claims, wherein the probe tube (3) has a plurality of outlet openings (4) which are supplied with fluid via the supply channel (5).

10. Device (1) according to claim 9, wherein suction openings (25) are spatially assigned to respective outlet openings (4) in order to homogenize the flow of the gas flow (24) around the probe tube (3) in the region of the outlet openings (4).

11. Device (1) according to any of the preceding claims, wherein the probe tube (3) is produced using a 3D-printing process.

12. Device (1) according to any of the preceding claims, wherein the probe tube (3) is formed from at least one probe tube element (16) which can be assembled with further probe tube elements (16).

13. Method for examining a gas flow (24) in a room (2) with a device (1) according to any of claims 1 to 12 comprising the following steps:
a) arranging the probe tube (3) in the room in such a way that the flattened cross-sectional profile (6) is aligned with the gas flow (24);
b) providing fluid for visualizing the gas flow (24) through the at least one outlet opening (4) of the probe tube (3);
c) suctioning a boundary layer (22) of the gas flow (24) around the probe tube (3) via a suction opening (25) connected to a suction channel (26), in order to reduce turbulence of the gas flow (24).

## Revendications

1. Dispositif (1) permettant de visualiser des écoulements de gaz (24) dans un espace (2), présentant un tube de sonde (3) qui est conçu pour s'étendre à l'intérieur de l'espace (2), dans lequel le tube de sonde (3) présente au moins un orifice de sortie (4) par l'intermédiaire duquel l'introduction dosée d'un fluide dans l'espace (2) pour visualiser les écoulements de gaz (24) est possible, dans lequel un canal d'alimentation (5) est disposé dans le tube de sonde (3) pour alimenter en fluide l'au moins un orifice de sortie (4), dans lequel le tube de sonde (3) présente un profil de section transversale (6) aplati comportant un bord d'attaque (7) et un bord de fuite (8), et dans lequel l'orifice de sortie (4) est disposé sur le tube de sonde (3) dans la zone du bord de fuite (8), **caractérisé en ce que** le tube de sonde (3) présente en outre au moins un orifice d'aspiration (25), à travers lequel une couche limite (22) d'un écoulement de gaz (24) peut être aspirée autour du tube de sonde (3), afin de réduire les turbulences de l'écoulement de gaz (24), dans lequel au moins un canal d'aspiration (26) séparé du canal d'alimentation (5) est disposé dans le tube de sonde (3) et relié à l'au moins une ouverture d'aspiration (25).

2. Dispositif (1) selon la revendication 1, dans lequel le profil de section transversale (6) du tube de sonde (3) est conçu à la manière d'un profil d'aile d'aéronef entièrement symétrique.

3. Dispositif (1) selon l'une des revendications précédentes, dans lequel l'au moins un orifice d'aspiration (25) est disposé sur une surface latérale (23) du tube de sonde (3), en amont de l'au moins un orifice de sortie (4) dans le sens d'écoulement de l'écoulement de gaz (24).

4. Dispositif (1) selon l'une des revendications précédentes, dans lequel l'au moins un orifice d'aspiration (25) est disposé dans une zone arrière de la surface latérale (23), plus près du bord de fuite (8) que du bord d'attaque (7) du tube de sonde (3).

5. Dispositif (1) selon l'une des revendications précédentes, dans lequel le tube de sonde (3) présente, sur les deux surfaces latérales (23) du profil de section transversal (6), respectivement au moins un orifice d'aspiration (25).

6. Dispositif (1) selon la revendication 5, dans lequel au moins deux canaux d'aspiration (26) sont disposés dans le tube de sonde (3), dans lequel au moins un premier canal d'aspiration (26) est relié à des orifices d'aspiration (25) disposés sur une première surface latérale (23), dans lequel au moins un second canal d'aspiration (26) est relié à des orifices d'aspiration (25) disposés sur une seconde surface latérale (23).

7. Dispositif (1) selon l'une des revendications précédentes, dans lequel le tube de sonde (3) présente en outre un appareil de chauffage (9) avec lequel au moins le canal d'alimentation (5) peut être chauffé.

8. Dispositif (1) selon l'une des revendications précédentes, dans lequel le bord de fuite (8) est interrompu, dans la zone de l'au moins un orifice de sortie (4), par un tube de sortie (10) qui forme l'orifice de sortie (4) et est relié au canal d'alimentation (5).

9. Dispositif (1) selon l'une des revendications précédentes, dans lequel le tube de sonde (3) présente une pluralité d'orifices de sortie (4) alimentés en fluide par l'intermédiaire du canal d'alimentation (5).

10. Dispositif (1) selon la revendication 9, dans lequel des orifices d'aspiration (25) sont respectivement associés spatialement à des orifices de sortie (4) afin d'uniformiser l'écoulement de gaz (24) autour du tube de sonde (3) dans la zone des orifices de sortie (4).

11. Dispositif (1) selon l'une des revendications précédentes, dans lequel le tube de sonde (3) est fabriqué par un procédé d'impression 3D.

12. Dispositif (1) selon l'une des revendications précédentes, dans lequel le tube de sonde (3) est formé à partir d'au moins un élément de tube de sonde (16) pouvant être assemblé avec d'autres éléments de tube de sonde (16).

13. Procédé pour l'analyse d'un écoulement de gaz (24) dans un espace (2) à l'aide d'un dispositif (1) selon l'une des revendications 1 à 12, présentant les étapes suivantes :
a) disposition du tube de sonde (3) dans l'espace de telle sorte que le profil de section transversale (6) aplati est orienté vers l'écoulement de gaz (24) ;
b) fourniture d'un fluide permettant de visualiser l'écoulement de gaz (24) à travers l'au moins un orifice de sortie (4) du tube de sonde (3) ;
c) aspiration d'une couche limite (22) de l'écoulement de gaz (24) autour du tube de sonde (3) par l'intermédiaire d'un orifice d'aspiration (25) relié à un canal d'aspiration (26) afin de réduire les turbulences de l'écoulement de gaz (24).
